# EUROPÄISCHE PATENTSCHRIFT

(11) **EP 1 873 722 B1**
(45) Veröffentlichungstag und Bekanntmachung des Hinweises auf die Patenterteilung: **08.05.2013**
(21) Anmeldenummer: 06013509.2
(22) Anmeldetag: 29.06.2006
(51) Int. Cl.: G07C 9/00

(54) **Zugangskontrollsystem**
Access control system
Système de contrôle d'accès

(43) Veröffentlichungstag der Anmeldung: 02.01.2008
(73) Patentinhaber: Delphi Technologies, Inc., Troy, MI 48007 (US)
(72) Erfinder: Hildebrand, Carsten, 42115 Wuppertal (DE)
(74) Vertreter: Robert, Vincent

(56) Entgegenhaltungen:
- EP-A- 0 926 623
- EP-A1- 0 994 364
- EP-A1- 1 703 472
- EP-A2- 1 081 000
- EP-A2- 1 228 931
- WO-A2-2005/088561
- DE-B3- 10 325 246
- "AVANTE ACCESS-TRAKKER FREQUENTLY ASKED QUESTIONS" INTERNET CITATION, [Online] 2004, XP002327136 Gefunden im Internet: URL:http://www.aitechnology.com/smartcardl ockwebsite/faq.asp> [gefunden am 2005-05-02]

## Beschreibung

Die Erfindung betrifft ein Zugangskontrollsystem der im Oberbegriff des Anspruchs 1 angegeben Art. Ein derartiges Zugangskontrollsystem ist in der EP-A-0 926 623 beschrieben.

Ein solches Zugangskontrollsystem kommt in der Regel dort zum Einsatz, wo es um die Überprüfung geht, ob eine jeweilige Person als Inhaber einer jeweiligen Identifikationseinrichtung autorisiert ist, die betreffende Zugangskontrolleinrichtung zu passieren. Dies gilt sowohl für ortsfeste Zugangskontrolleinrichtungen, zu denen nur ein ausgewählter Personenkreis Zutritt hat, als auch für mobile Zugangskontrolleinrichtungen, insbesondere bei Fahrzeugen, wie Kraftfahrzeugen, Schiffen oder Fahrrädern. Mit den betreffenden Zugangskontrolleinrichtungen soll hier insbesondere einem Diebstahl des Fahrzeuges entgegengewirkt werden.

Ein jeweiliges Zugangskontrollsystem kann insbesondere als so genanntes schlüsselloses Zugangssystem und/oder schlüsselloses Startsystem für Fahrzeuge vorgesehen sein. Es umfasst in diesem Fall ein dem Fahrzeug zugeordnetes elektronisches Steuergerät, welches in der Regel dauerhaft mit Energie versorgt ist, und die mobilen Identifikationseinrichtungen, die einen jeweiligen autorisierten Benutzer identifizieren sollen. Dabei kann eine jeweilige Identifikationseinrichtung selbst Teil eines Fahrzeugschlüssels sein, der mit der Steuereinrichtung im Bereich der Schließ- und/oder Startanlage des Fahrzeuges in vorzugsweise bidirektionalem Datenaustausch steht. Die jeweiligen Identifikationseinrichtungen können insbesondere auch in Chipkarten oder dergleichen integriert und beispielsweise als Transponder ausgeführt sein. Solche Transponder weisen keine eigene Energieversorgung auf, sie werden vielmehr bei einer Annäherung der Identifikationseinrichtung an die Steuereinrichtung drahtlos mit Energie versorgt und im weiteren automatisch zur Übertragung der Authentisierungsantwortsignale angesprochen.

Bei den bisher üblichen Zugangskontrollsystemen der eingangs genannten Art werden zwei Frequenzen verwendet, eine für die Datenübertragung sowie die Weckfunktion ausgehend vom Fahrzeug, und eine für die Datenübertragung ausgehend von der Identifikationseinrichtung zurück zum Fahrzeug.

Die Datenübertragungsrate ist üblicherweise kleiner oder gleich 10 kbps für die Datenübertragung zwischen einem Fahrzeug und einer Identifikationseinrichtung.

Für die Datenübertragung zwischen einer Identifikationseinrichtung und einem Fahrzeug wird bisher unabhängig davon, ob sich die Identifikationseinrichtung innerhalb oder außerhalb des Fahrzeugs befindet, ein und dieselbe Signalamplitude verwendet.

Bei den bisher üblichen Zugangskontrollsystemen ist auch kein angemessener Schutz gegen einen sogenannten Relais-Angriff vorgesehen, bei dem die Kommunikationsstrecke zwischen der Identifikationseinrichtung und dem Fahrzeug durch Unbefugte verlängert wird.

Die bisherigen Schlüsselanhänger sind batteriebetrieben, was den Nachteil mit sich bringt, dass nur eine begrenzte Batterie-Lebenszeit vorliegt.

Die bisher üblichen Zugangskontrollsysteme besitzen also eine Reihe von Nachteilen, die sich insbesondere im Preis sowie im Bedienungskomfort auswirken. Da die Batterie-Lebenszeit begrenzt ist, ist eine Back-up-Einrichtung erforderlich, die es dem Benutzer erlaubt, auch im Fall einer leeren Batterie in das Fahrzeug zu gelangen und dieses zu starten. Die entsprechende Back-up-Einrichtung erhöht nun aber die Kosten und verringert den Komfort. Die für eine HF-Datenübertragung verwendeten Frequenzen sind in den verschiedenen Ländern aufgrund der verschiedenen gesetzlichen Regelungen unterschiedlich. Zudem bringt die Verwendung zweier Frequenzen höhere Systemkosten mit sich. Es stehen zwar Technologien zur Verfügung, die einen Schutz gegen einen sogenannten Relais-Angriff zur Verlängerung des HF-Kanals gewährleisten. Der NF-Kanal bleibt jedoch ungeschützt und ermöglicht einen Relais-Angriff mit einer einfachen Relais-Station innerhalb des HF-Kommunikationsbereichs (etwa 30 m).

Es wurden bereits schlüssellose Zugangssysteme bzw. Startsysteme für Fahrzeuge vorgeschlagen, deren Identifikationseinrichtung einen aktiven Transponder umfasst, der über eine integrierte, nicht wieder aufladbare Batterie betrieben wird, um eine niederfrequente und hochfrequente Kommunikation zu realisieren. Die verwendete Batterie entlädt sich mit der Zeit oder kann aus einem anderen Grund wie beispielsweise einer zu niedrigen Temperatur den aktiven Transponder dann nicht mehr mit der benötigten Energie versorgen. Um dennoch den Startvorgang gewährleisten zu können, wird mittels einer in der Identifikationseinrichtung vorgesehenen elektronischen Schaltung die Unterversorgung erkannt und auf einen Transponder-Kommunikationskanal umgeschaltet, mit dessen Hilfe die Daten zur Startfreigabe übermittelt werden können.

Bei dem aus der EP-A-0 926 623 bekannten Zugangskontrollsystem der eingangs genannten Art wird der der Identifikationseinrichtung zugeordnete Transponder in dem zweiten Betriebszustand stets mit einer durch die Ausgangsspannung der aufladbaren Energiespeichermittel bestimmten Sendeleistung betrieben.

Der Erfindung liegt die Aufgabe zugrunde, ein verbessertes Zugangskontrollsystem der eingangs genannten Art zu schaffen, bei dem die genannten Probleme beseitigt sind.

Diese Aufgabe wird nach der Erfindung durch die Merkmale im kennzeichnenden Teil des unabhängigen Anspruchs 1 gelöst.

Die wieder aufladbaren Energiespeichermittel können wenigstens eine wiederaufladbare Batterie und/oder wenigstens einen Kondensator umfassen.

Für die bidirektionale Kommunikation zwischen der zugangsseitigen Steuereinrichtung und der benutzerseitigen Identifikationseinrichtung können prinzipiell eine oder mehrere Frequenzen verwendet werden.

So wird gemäß einer bevorzugten praktischen Ausführungsform des erfindungsgemäßen Zugangskontrollsystems eine erste Frequenz, z.B. Niederfrequenz, für die Datenübertragung sowie die Weckfunktion ausgehend von der zugangsseitigen Steuereinrichtung und eine zweite Frequenz, insbesondere eine Hochfrequenz, für die Datenübertragung ausgehend von der Identifikationseinrichtung zurück zum Fahrzeug verwendet.

Der semipassiv betriebene Transponder kann also grundsätzlich für eine beliebige Frequenz bzw. einen beliebigen Frequenzbereich vorgesehen sein.

Gemäß einer anderen vorteilhaften Ausführungsform des erfindungsgemäßen Zugangskontrollsystems wird für die bidirektionale drahtlose Kommunikation zwischen der zugangsseitigen Steuereinrichtung und der benutzerseitigen Identifikationseinrichtung jedoch eine einzige Frequenz, vorzugsweise eine Frequenz im Bereich von 13,56 MHz, verwendet.

Die Frequenz 13,56 MHz stellt einen Kompromiss zwischen den Eigenschaften der herkömmlichen NF-Frequenz (125 kHz) und den Eigenschaften der HF-Frequenz dar. Die sich ergebende Kommunikationsreichweite deckt das Innere eines Fahrzeugs sowie einen Bereich bis zu 2 m im Bereich um das Fahrzeug ab. Es ist eine vollständig schlüssellose (KLC) Funktionsweise gewährleistet, wobei eine Fernsteuerfunktion (RKE = remote controller function) jedoch nicht möglich ist.

Vorteilhafterweise arbeitet der semipassive Transponder für die bidirektionale drahtlose Kommunikation mit der Steuereinrichtung bei einer einzigen Frequenz, vorzugsweise einer Frequenz im Bereich von 13,56 MHz.

Bisher waren für Fahrzeuge zwei prinzipiell unterschiedliche Transponder-Systeme vorgesehen, nämlich sogenannte passive Transponder (Immobilizer)-Systeme, die keine Batterie verwenden, und aktive Fernsteuersysteme, die eine Batterie erfordern.

Ein semipassiver Transponder kombiniert nun die Vorteile beider Systeme. Er bedarf ebenso wie ein herkömmlicher Transponder im passiven Betrieb keiner Batterie, besitzt jedoch die Kommunikationsreichweite eines aktiven Systems. Er erhält die Energie vom Fahrzeug in der gleichen Art wie ein herkömmlicher Transponder. Diese Energie wird in dem semipassiven Transponder jedoch gespeichert, um danach für eine aktive Datenübertragung in Richtung des Fahrzeugs verwendet zu werden. Eine aktive Kommunikation erhöht die Kommunikationsreichweite im Vergleich zu einem "herkömmlichen" Transponder. Die Energie wird bevorzugt in einer wiederaufladbaren Batterie oder in einem Kondensator gespeichert werden. Es existieren insbesondere die beiden folgenden Möglichkeiten für ein entsprechendes Energieübertragungsmanagement, nämlich entweder die Übertragung und Speicherung eines Energieanteils, der groß genug ist, eine oder mehrere vollständige Kommunikationsvorgänge zu gewährleisten, oder die Verwendung einer sequentiellen Betriebsart, bei der zunächst Energie, dann Daten, dann wieder Energie, usw. übertragen werden.

Ein Beispiel für die Verwendung eines semipassiven Transponders für eine vollständig schlüssellose (KLC) Anwendung könnte beispielsweise wie folgt aussehen:

Ein Fahrzeug enthält eine bestimmte Anordnung mit einer Antennenschleife, die sowohl einen Burst hoher Energie für die Aufladesequenz als auch einen Datenübertragungsabschnitt der Kommunikation hoher Geschwindigkeit und geringer Sendeleistung ermöglicht. Die Kommunikation beginnt mit einem Aufweck-Muster, das von einer der Fahrzeugantennen gesendet wird, nachdem an einem Türgriff gezogen wurde. Danach wird die Energie mit sehr hoher Sendeleistung mit einem schmalbandigen Burst mittels einer entsprechenden Antennenanordnung des Fahrzeugs übertragen. Die gespeicherte Energie wird dazu verwendet, die Datenstation für die Datenaustausch-Sequenz bei sehr geringer Energie und großer Bandbreite mit einem Träger gleicher Frequenz zu versorgen. Die große Bandbreite ermöglicht das Aussenden sowie das Empfangen von Daten mit einer sehr hohen Datenrate sowie die Verwendung eines Breitbandspektrum-Protokolls.

Die Funktion des semipassiven Transponders ist generell nicht auf eine bestimmte Frequenz beschränkt. Bevorzugt wird ein solcher semipassiver Transponder jedoch bei einer Frequenz im Bereich von 13,56 MHz eingesetzt.

Von Vorteil ist insbesondere auch, wenn für die bidirektionale drahtlose Kommunikation zwischen der Steuereinrichtung und der Identifikationseinrichtung ein Breitbandspektrum bei einer Trägerfrequenz von vorzugsweise 13,56 MHz oder ein Frequenzsprungverfahren verwendet wird.

Es kann also insbesondere ein Breitbandspektrum-Algorithmus für eine Kommunikation bei vorzugsweise 13,56 MHz, zum Beispiel das DSSS-Protokoll, verwendet werden. Ein solches Protokoll gewährleistet eine höhere Datensicherheit und erhöht die Unempfindlichkeit gegenüber Interferenzen. Es können beispielsweise auch Kommunikationsprotokolle verwendet werden, die für 2,4 GHz-Kommunikationsstandards wie z.B. das Frequenzsprungverfahren entwickelt wurden.

Derzeit sind schlüssellose Systeme mit einer Back-up-Funktion versehen, um den Fahrzeugmotor auch in dem Fall starten zu können, dass die Batterie leer ist. Normalerweise sind eine zusätzliche Antenne in dem Fahrzeug und eine besondere Andock-Position für die Identifikationseinrichtung erforderlich. Ein weiterer Nachteil der herkömmlichen Zugangskontrollsysteme besteht darin, dass der Fahrer wissen muss, was in diesem speziellen Fall zu tun ist und die Betriebsanleitung zu Rate ziehen muss. Andernfalls kann er das Fahrzeug nicht starten.

Erfindungsgemäß erfolgt bei sich außerhalb des Fahrzeugs befindlicher Identifikationseinrichtung eine aktive Kommunikation mit relativ höherer Sendeleistung, während bei sich innerhalb des Fahrzeugs befindlicher Identifikationseinrichtung sowohl eine aktive Kommunikation als auch eine passive Kommunikation mit relativ geringerer Sendeleistung erfolgen kann.

Es kann also insbesondere eine automatische Back-up-Funktion vorgesehen sein, die durch den Fahrer selbst dann nicht wahrnehmbar ist, wenn die sequentielle Kommunikation nicht funktioniert (defekter Kondensator usw.). Für diesen Zweck ist überall innerhalb des Fahrzeugs eine passive Kommunikation möglich.

Gemäß einer weiteren bevorzugten praktischen Ausführungsform des erfindungsgemäßen Zugangskontrollsystems sind Mittel vorgesehen, um im Innern des Fahrzeugs ein rotierendes dreidimensionales Magnetfeld zu erzeugen.

Es können also rotierende magnetische Felder gebildet werden, um in dem Fahrzeug eine Art dreidimensionales Feld zu erzeugen. Ein solches Verfahren ist an sich für 13,56 MHz-Anwendungen bekannt, es wurde bisher jedoch noch nicht in Fahrzeugen angewandt. Ein dreidimensionales Feld im Innern des Fahrzeugs ermöglicht beispielsweise die Kommunikation mit einem eindimensionalen Transponder, beispielsweise für die Back-up-Funktion. Überdies bringt es auch bezüglich eines Schutzes gegenüber Relais-Stationen Vorteile.

Der benutzerseitigen Identifikationseinrichtung ist vorteilhafterweise ein dreidimensionaler, vorzugsweise bei einer Frequenz im Bereich von 13,56 MHz arbeitender Empfänger zugeordnet.

Die Verwendung eines dreidimensionalen Empfängers in einer Identifikationseinrichtung stellt die Kommunikation außerhalb des Fahrzeugs sicher, wo die Erzeugung eines dreidimensionalen Magnetfeldes nicht möglich ist.

Eine weitere bevorzugte praktische Ausführungsform des erfindungsgemäßen Zugangskontrollsystems zeichnet sich dadurch aus, dass insbesondere im Fall der Verwendung eines Breitbandspektrums zum Schutz gegen den Einsatz einer oder mehrerer Relay-Stationen durch Unbefugte Mittel für eine Laufzeitmessung vorzugsweise entsprechend einer Frequenz im Bereich von 13,56 MHz vorgesehen sind.

Eine der Möglichkeiten für einen Schutz gegen den Einsatz einer oder mehrerer Relais-Stationen besteht also in einer solchen Laufzeitmessung z. B. bei 13,56 MHz. Dabei können insbesondere die Vorteile von Breitband-Protokollen (Breitbandsignal) genutzt werden.

Die Verwendung eines rotierenden Magnetfeldes im Innern des Fahrzeugs bringt es mit sich, dass das Feld besondere geometrische Eigenschaften besitzt und zeitabhängig ist. Gemäß einer weiteren bevorzugten praktischen Ausführungsform des erfindungsgemäßen Zugangskontrollsystems sind daher Mittel zum Schutz gegen den Einsatz einer oder mehrerer Relais-Stationen durch Unbefugte vorgesehen, die auf bestimmten geometrischen und zeitlichen Eigenschaften des im Innern des Fahrzeugs erzeugten rotierenden dreidimensionalen Magnetfeldes basieren.

Eine Verwendung standardisierter Übertragungsprotokolle (zum Beispiel IS015693 oder IS014443) bietet die Möglichkeit, beispielsweise einen Schlüsselanhänger als Interface zu einem nicht automatischen Zugangssystem zu verwenden.

Das erfindungsgemäße Zugangskontrollsystem bringt also eine Reihe von Vorteilen mit sich. So wird im Fall einer Unterversorgung der aktiven Transponder-Funktionalität auf eine semipassive oder semiaktive Kommunikation umgeschaltet. Dieser Kommunikationskanal ermöglicht es, alle auch für die aktive Kommunikation verwendeten Komponenten und Frequenzen zu verwenden, einschließlich eines Kondensators oder einer wiederaufladbaren Batterie, der bzw. die durch eine speziell in das Kommunikationsprotokoll eingefügte Ladezeit aufgeladen werden kann, um die aktive, z.B. nieder- und hochfrequente Kommunikation mit Energie zu versorgen. Um die Energie zu übertragen, muss die Identifikationseinrichtung gegebenenfalls in einem definierten Abstand zu einer der niederfrequenten (z.B. 125 kHz) Antennenspulen platziert werden. Es können alle Komponenten für den Transponder-Kommunikationskanal eingespart werden.

Die bevorzugte Verwendung einer einzigen Frequenz führt zu einer Verringerung der Gesamtsystemkosten. Eine weltweite Verwendung der gleichen Frequenz bringt auch für die Erstausrüster eine höhere Flexibilität sowie eine Kostenverringerung mit sich. Es ist ein zuverlässigerer Schutz gegenüber einem unbefugten Einsatz von Relais-Stationen gewährleistet. Das System zum Schutz gegen einen Abfall der Batterieleistung bringt einen höheren Komfort für den Benutzer mit sich. So treten keinerlei Probleme im Zusammenhang mit der Batterie-Lebenszeit mehr auf. Die automatische Back-up-Funktion bedeutet auch einen höheren Komfort sowie eine bessere Funktionalität.

Wie bereits erwähnt, kann der semipassive Transponder grundsätzlich jedoch auch bei einer beliebigen Frequenz oder Frequenzen bzw. in einem beliebigen Frequenzbereich arbeiten.

## Patentansprüche

1. Zugangskontrollsystem für Fahrzeuge, mit einer zugangsseitigen Steuereinrichtung, einer benutzerseitigen Identifikationseinrichtung und einem der Steuereinrichtung zugeordneten Transceiver für eine bidirektionale drahtlose Kommunikation mit der Identifikationseinrichtung, wobei der benutzerseitigen Identifikationseinrichtung für die bidirektionale drahtlose Kommunikation mit der zugangsseitigen Steuereinrichtung wenigstens ein Transponder zugeordnet ist, der in einem ersten Betriebszustand der Identifikationseinrichtung über eine in dieser integrierte nicht wieder aufladbare Batterie mit Energie versorgt wird, und der Identifikationseinrichtung zugeordnete Mittel zur Überwachung des Zustands der nicht wieder aufladbaren Batterie sowie Mittel vorgesehen sind, um die Identifikationseinrichtung bei Erreichen eines vorgebbaren Batterieentladezustands in einen zweiten Betriebszustand umzuschalten, in dem der der Identifikationseinrichtung zugeordnete Transponder so betreibbar ist, dass er über die zugangsseitige Steuereinrichtung mit Energie versorgt wird,
**dadurch gekennzeichnet,**
**dass** der Transponder in dem zweiten Betriebszustand semipassiv betreibbar ist, indem ihm die über die zugangsseitige Steuereinrichtung zugeführte Energie in wieder aufladbaren Energiespeichermitteln derart gespeichert wird, dass die Sendeleistung des Transponders für eine aktive Kommunikation, d.h. für eine Kommunikation mit erhöhter Reichweite gegenüber der Reichweite eines herkömmlichen batterielosen Transponders im passiven Betrieb, erhöht wird, wobei die wieder aufladbaren Energiespeichermittel durch eine speziell in das Kommunikationsprotokoll eingefügte Ladezeit aufladbar sind, um die aktive Kommunikation im semipassiven Betriebszustand mit Energie zu versorgen, und
**dass** bei sich außerhalb des Fahrzeugs befindlicher Identifikationseinrichtung die aktive Kommunikation mit relativ höherer Sendeleistung des Transponders erfolgt, während bei sich innerhalb des Fahrzeugs befindlicher Identifikationseinrichtung sowohl die aktive Kommunikation als auch eine passive Kommunikation mit relativ geringerer Sendeleistung des Transponders erfolgen kann.

2. Zugangskontrollsystem nach Anspruch 1,
**dadurch gekennzeichnet ,**
**dass** die wieder aufladbaren Energiespeichermittel wenigstens eine wieder aufladbare Batterie umfassen.

3. Zugangskontrollsystem nach Anspruch 1 oder 2,
**dadurch gekennzeichnet,**
**dass** die wieder aufladbaren Energiespeichermittel wenigstens einen Kondensator umfassen.

4. Zugangskontrollsystem nach einem der vorhergehenden Ansprüche,
**dadurch gekennzeichnet,**
**dass** für die bidirektionale Kommunikation zwischen der zugangsseitigen Steuereinrichtung und der benutzerseitigen Identifikationseinrichtung eine oder mehrere Frequenzen verwendet werden.

5. Zugangskontrollsystem nach Anspruch 4,
**dadurch gekennzeichnet,**
**dass** eine erste Frequenz für die Datenübertragung sowie eine Weckfunktion ausgehend von der zugangsseitigen Steuereinrichtung und eine zweite Frequenz für die Datenübertragung ausgehend von der Identifikationseinrichtung zurück zur Steuereinrichtung verwendet werden.

6. Zugangskontrollsystem nach Anspruch 4,
**dadurch gekennzeichnet,**
**dass** für die bidirektionale drahtlose Kommunikation zwischen der zugangsseitigen Steuereinrichtung und der benutzerseitigen Identifikationseinrichtung eine einzige Frequenz, vorzugsweise eine Frequenz im Bereich von 13,56 MHz, verwendet wird.

7. Zugangskontrollsystem nach einem der vorhergehenden Ansprüche,
**dadurch gekennzeichnet,**
**dass** der semipassiv betriebene Transponder für die bidirektionale drahtlose Kommunikation mit der Steuereinrichtung bei einer einzigen Frequenz, vorzugsweise einer Frequenz im Bereich von 13,56 MHz, arbeitet.

8. Zugangskontrollsystem nach einem der vorhergehenden Ansprüche,
**dadurch gekennzeichnet,**
**dass** für die bidirektionale drahtlose Kommunikation zwischen der Steuereinrichtung und der Identifikationseinrichtung ein Breitbandspektrum bei einer Trägerfrequenz von vorzugsweise 13,56 MHz oder ein Frequenzsprungverfahren verwendet wird.

9. Zugangskontrollsystem nach einem der vorhergehenden Ansprüche,
**dadurch gekennzeichnet,**
**dass** Mittel vorgesehen sind, um im Innern des Fahrzeugs ein rotierendes dreidimensionales Magnetfeld zu erzeugen.

10. Zugangskontrollsystem nach einem der vorhergehenden Ansprüche,
**dadurch gekennzeichnet,**
**dass** der benutzerseitigen Identifikationseinrichtung ein dreidimensionaler, vorzugsweise bei einer Frequenz im Bereich von 13,56 MHz arbeitender Empfänger zugeordnet ist.

11. Zugangskontrollsystem nach einem der vorhergehenden Ansprüche,
**dadurch gekennzeichnet,**
**dass** insbesondere im Fall der Verwendung eines Breitbandspektrums zum Schutz gegen den Einsatz einer oder mehrerer Relay-Stationen durch Unbefugte Mittel für eine Laufzeitmessung vorzugsweise entsprechend einer Frequenz im Bereich von 13,56 MHz vorgesehen sind.

12. Zugangskontrollsystem nach einem der vorhergehenden Ansprüche,
**dadurch gekennzeichnet,**
**dass** Mittel zum Schutz gegen den Einsatz einer oder mehrerer Relay-Stationen durch Unbefugte vorgesehen sind, die auf bestimmten geometrischen und zeitlichen Eigenschaften eines im Innern des Fahrzeugs erzeugten rotierenden dreidimensionalen Magnetfeldes basieren.

## Claims

1. Access control system for vehicles, having an access-side control means, a user-side identification means and a transceiver associated with the control means for bidirectional wireless communication with the identification means, wherein at least a transponder is associated with the user-side identification means for the bidirectional wireless communication with the access-side control means, the transponder, in a first operating state of the identification means, being powered by a non-rechargeable battery integrated therein, and means associated with the identification means are provided for monitoring the state of the non-rechargeable battery and means are provided for switching the identification means to a second operating state when reaching a predeterminable battery discharge state, in which the transponder associated with the identification means is operable such that it is powered via the access-side control means, **characterized in that**
the transponder in the second operating state is semi-passively operable in that energy supplied via the access-side control means is stored in rechargeable energy storage means such that transmission power of the transponder is increased for an active communication, i.e. a communication having a higher range compared to the range of a conventional transponder without battery in passive operation, wherein the rechargeable energy storage means are rechargeable by a charging time specifically included in the communication protocol, to power the active communication in the semi-passive operating state, and
the active communication is provided with relatively higher transmission power of the transponder if the identification means is arranged outside the vehicle, and both the active communication and a passive communication may be provided with relatively smaller transmission power of the transponder if the identification means is arranged inside the vehicle.

2. Access control system according to claim 1,
**characterized in that**
the rechargeable energy storage means include at least a rechargeable battery.

3. Access control system according to claim 1 or 2,
**characterized in that**
the rechargeable energy storage means include at least a capacitor.

4. Access control system according to one of the preceding claims,
**characterized in that**
one or more frequencies are used for the bidirectional communication between the access-side control means and the user-side identification means.

5. Access control system according to claim 4,
**characterized in that**
a first frequency is used for the data transmission and an alarm function starting from the access-side control means and a second frequency is used for the data transmission starting from the identification means back to the control means.

6. Access control system according to claim 4,
**characterized in that**
a single frequency, preferably a frequency in the range of 13.56 MHz, is used for the bidirectional wireless communication between the access-side control means and the user-side identification means.

7. Access control system according to one of the preceding claims,
**characterized in that**
the semi-passively operated transponder operates at a single frequency, preferably a frequency in the range of 13.56 MHz, for the bidirectional wireless communication with the control means.

8. Access control system according to one of the preceding claims,
**characterized in that**
a wide band spectrum at a carrier frequency of preferably 13.56 MHz or a frequency hopping method is used for the bidirectional wireless communication between the control means and the identification means.

9. Access control system according to one of the preceding claims,
**characterized in that**
means are provided for generating a rotating three-dimensional magnetic field in the interior of the vehicle.

10. Access control system according to one of the preceding claims,
**characterized in that**
a three-dimensional receiver, preferably operating at a frequency in the range of 13.56 MHz, is associated with the user-side identification means.

11. Access control system according to one of the preceding claims,
**characterized in that**
means are provided for run-time measurement preferably in accordance with a frequency in the range of 13.56 MHz, in particular in case of using a wide band spectrum for protection against use of one or more relay stations by unauthorized persons.

12. Access control system according to one of the preceding claims,
**characterized in that**
means are provided based on given geometrical and temporal properties of a rotating three-dimensional magnetic field generated in the interior of the vehicle, for protection against use of one or more relay stations by unauthorized persons.

## Revendications

1. Système de contrôle d'accès pour véhicules, comprenant un dispositif de commande du côté accès, un dispositif d'identification du côté utilisateur, et un émetteur-récepteur associé au dispositif de commande pour une communication sans fil bidirectionnelle avec le dispositif d'identification, dans lequel au moins un transpondeur est associé au dispositif d'identification du côté utilisateur pour la communication sans fil bidirectionnelle avec le dispositif de commande du côté accès, transpondeur qui, dans un premier état de fonctionnement du dispositif d'identification, est alimenté en énergie via une batterie non rechargeable intégrée dans celui-ci, et il est prévu des moyens, associés au dispositif d'identification, pour la surveillance de l'état de la batterie non rechargeable, afin de commuter le dispositif d'identification, lorsque la batterie atteinte un état de décharge prédéterminée, vers un second état de fonctionnement dans lequel le transpondeur associé au dispositif d'identification est capable de fonctionner de telle manière qu'il est alimenté en énergie via le dispositif de commande du côté accès, **caractérisé en ce que**
dans le second état de fonctionnement, le transpondeur est capable de fonctionner de manière semi-passive **en ce que** l'énergie qui lui est apportée via le dispositif de commande du côté accès est accumulée dans des moyens accumulateurs d'énergie rechargeables de telle façon que la puissance d'émission du transpondeur est augmentée pour une communication active, c'est-à-dire pour une communication avec portée augmentée par rapport à la portée d'un transpondeur classique sans batterie en fonctionnement passif, et les moyens accumulateurs d'énergie rechargeables sont rechargeables en un temps de charge spécialement intégré dans le protocole de communication afin de d'alimenter la communication active en énergie dans l'état de fonctionnement semi-passif, et
**en ce que** lorsque le dispositif d'identification se trouve à l'extérieur du véhicule, la communication active a lieu avec une puissance d'émission relativement plus élevée du transpondeur, tandis que lorsque le dispositif d'identification se trouve à l'intérieur du véhicule, il peut se produire aussi bien une communication active qu'une communication passive avec une puissance d'émission relativement plus faible du transpondeur.

2. Système de contrôle d'accès selon la revendication 1,
**caractérisé en ce que** les moyens accumulateurs d'énergie rechargeables comprennent au moins une batterie rechargeable.

3. Système de contrôle d'accès selon la revendication 1 ou 2,
**caractérisé en ce que** les moyens accumulateurs d'énergie rechargeables comprennent au moins un condensateur.

4. Système de contrôle d'accès selon l'une des revendications précédentes,
**caractérisé en ce qu'**une ou plusieurs fréquences sont utilisées pour la communication bidirectionnelle entre le dispositif de commande du côté accès et le dispositif d'identification du côté utilisateur.

5. Système de contrôle d'accès selon la revendication 4,
**caractérisé en ce qu'**une première fréquence est utilisée pour le transfert de données ainsi qu'une fonction du réveil partant du dispositif de commande du côté accès, et **en ce qu'**une seconde fréquence est utilisée pour le transfert de données partant du dispositif d'identification en retour vers le dispositif de commande.

6. Système de contrôle d'accès selon la revendication 4,
**caractérisé en ce qu'**une unique fréquence, de préférence une fréquence dans la plage de 13,56 MHz, est utilisée pour la communication sans fil bidirectionnelle entre le dispositif de commande du côté accès et le dispositif d'identification du côté utilisateur.

7. Système de contrôle d'accès selon l'une des revendications précédentes,
**caractérisé en ce que** le transpondeur en fonctionnement semi-passif fonctionne à une fréquence unique, de préférence une fréquence dans la plage de 13,56 MHz, pour la communication sans fil bidirectionnelle avec le dispositif de commande.

8. Système de contrôle d'accès selon l'une des revendications précédentes,
**caractérisé en ce qu'**un spectre à large bande, à une fréquence porteuse de préférence de 13,56 MHz, ou une procédure à saut de fréquence est utilisé(e) pour la communication sans fil bidirectionnelle entre le dispositif de commande et le dispositif d'identification.

9. Système de contrôle d'accès selon l'une des revendications précédentes,
**caractérisé en ce qu'**il est prévu des moyens pour engendrer à l'intérieur du véhicule un champ magnétique tridimensionnel rotatif.

10. Système de contrôle d'accès selon l'une des revendications précédentes,
**caractérisé en ce qu'**un récepteur tridimensionnel, fonctionnant de préférence vers une fréquence dans la plage de 13,56 MHz, est associé au dispositif d'identification du côté utilisateur.

11. Système de contrôle d'accès selon l'une des revendications précédentes,
**caractérisé en ce que**, en particulier dans le cas de l'utilisation d'un spectre à large bande, pour la protection à l'encontre de l'utilisation d'une ou plusieurs stations relais par des personnes non autorisées, il est prévu des moyens pour une mesure du temps de parcours, de préférence en correspondance d'une fréquence dans la plage de 13,56 MHz.

12. Système de contrôle d'accès selon l'une des revendications précédentes,
**caractérisé en ce qu'**il est prévu des moyens pour la protection à l'encontre de l'utilisation d'une ou plusieurs stations relais par des personnes non autorisées, qui sont basés sur certaines propriétés géométriques et temporelles d'un champ magnétique tridimensionnel rotatif engendré à l'intérieur du véhicule.
